# EUROPÄISCHE PATENTSCHRIFT

(11) **EP 2 732 951 B1**
(45) Veröffentlichungstag und Bekanntmachung des Hinweises auf die Patenterteilung: **17.01.2024**
(21) Anmeldenummer: 12193099.4
(22) Anmeldetag: 16.11.2012
(51) Int. Cl.: B29C 45/14, B29C 45/16, B29C 45/56, B29C 44/12, B29C 44/58

(54) **Verfahren für die Herstellung eines Verkleidungsteils sowie Verkleidungsteil hergestellt nach einem solchen Verfahren**
Method for manufacturing a cladding part and cladding part produced by means of such a method
Procédé de fabrication d'un élément d'habillage ainsi que l'élément d'habillage fabriqué selon ce type de procédé

(43) Veröffentlichungstag der Anmeldung: 21.05.2014
(73) Patentinhaber: SMP Deutschland GmbH, 79268 Bötzingen (DE)
(72) Erfinder: Buchet, Yann, 67000 Strasbourg (FR); Nogaret, Eric, 68600 Biesheim (FR)
(74) Vertreter: Westphal, Mussgnug & Partner Patentanwälte mbB

(56) Entgegenhaltungen:
- DE-A1- 10 110 908
- DE-C1- 19 546 551
- DE-U1-202007 007 498
- JP-A- S62 132 622
- JP-A- 2002 355 871
- JP-A- 2003 053 776
- US-A1- 2004 043 683
- US-A1- 2004 097 650
- Anonymous: "Spritzprägen - Wikipedia", , 11 January 2010 (2010-01-11), XP055666154, Retrieved from the Internet: URL:https://de.wikipedia.org/w/index.php?t itle=Spritzprägen&oldid=69141196 [retrieved on 2020-02-06]
- Eyerer Peter: "Polymer Engineering", , 15 August 2008 (2008-08-15), pages 234-234, XP055809652, Retrieved from the Internet: URL:https://books.google.de/books?id=tN28q ob2PgIC&pg=PA234&q=Spritzpr%C3%A4gen#v=one page&q=Spritzpr%C3%A4gen&f=false [retrieved on 2021-06-01]

## Beschreibung

Die Erfindung betrifft ein Verfahren für die Herstellung eines Verkleidungsteils, insbesondere eines Verkleidungsteils für den Innenraum eines Fahrzeugs gemäß dem Oberbegriff des Patentanspruchs 1.

Beispielsweise ist aus der DE 10 2006 033 657 A1 ein Verfahren für die Herstellung eines Verkleidungsteils bekannt, bei dem das Verkleidungsteil zumindest teilweise aus Kunststoffmaterial hergestellt wird und aus zumindest einer ersten und einer zweiten Komponente besteht. Die zweite Komponente wird auf der ersten Komponente übergossen. Dazu wird als ein erster Vorbereitungsschritt die erste Komponente in eine bewegbare Form gegossen. Später wird die zweite Komponente auf der ersten Komponente übergossen, dies in einer einzigen Station. Weitere Verkleidungsbauteile sind aus der US 2004/097 650 A1, der JP 2002 355 871 A, der DE 20 2007 007 498 U1, der US 2004/043 683 A1, der JP 2003 053776 A, der JP S62 132622A, DE 101 10 908 A1 und der DE 195 46 551 C1 bekannt.

Auch wenn bei solchen bekannten, sogenannten "One-Shot"-Prozessen bereits kombinierte Kunststoffteile hergestellt werden, die eine Oberflächengüte hoher Qualität aufweisen, ist bisher zumindest ein weiterer Verfahrensschritt erforderlich, um Verkleidungsteilen für den Innenraum eines Fahrzeugs eine nötige Stabilität zu verleihen, insbesondere solchen, die beispielsweise eine Airbag-Abdeckung umfassen.

Der Erfindung liegt das Problem zugrunde, dass Herstellen von Verkleidungsteilen, insbesondere von Verkleidungsteilen für den Innenraum eines Fahrzeugs mit besonderen Anforderungen an die Stabilität der Verkleidungsteile, weiter zu verbessern, insbesondere Verfahrenszeiten zu verkürzen und Kosten zu senken.

Die Aufgabe wird erfindungsgemäß gelöst durch ein Verfahren mit den kennzeichnenden Merkmalen des Patentanspruchs 1.

Erfindungsgemäß wird als ein weiterer Vorbereitungsschritt dem späteren Übergießen mit einer zweiten Komponente vorangehend eine dritte Komponente in eine stationäre Form derselben Station eingelegt oder gegossen und während des späteren Übergießens die Formen aufeinander zu und/oder voneinander wegbewegt. Die zweite Komponente wird erfindungsgemäß mittels eines Einspritzprozesses zwischen der ersten Komponente und der dritten Komponente in einen Zwischenraum eingebracht und damit auf der ersten Komponente übergossen. Die Formen, die oben mit stationär und bewegbar näher beschriebenen sind, können im Rahmen der Erfindung diese Funktionen tauschen oder auch beide bewegbar ausgeführt sein.

Somit ist ein "One-Shot"-Verfahren zur Verfügung gestellt, mit dem ein Verkleidungsteil herstellbar ist, das die Funktionen "Oberfläche" und "Struktur" aufweist, auch dies in einer einzigen Station. Es müssen nicht wie bisher zwei Teile unabhängig voneinander gefertigt werden, die anschließend zueinander zu positionieren und zusammenzufügen sind. Insbesondere die dritte Komponente war bisher als Strukturelement separat herzustellen und nachträglich mit einem fertig produzierten Dekorelement zusammenzufügen.

Erfindungsgemäß sind durch die dritte Komponente hindurch Hohlräume der stationären Form für das eingespritzte Kunststoffmaterial erreichbar, sodass ein eingebrachter Kunststoff, insbesondere ein eingespritzter Kunststoffschaum, die dritte Komponente zumindest teilweise durchdringt.

Mit der erfindungsgemäßen Verfahrensform werden Verkleidungsteile hergestellt, deren Verbindung zwischen der zweiten und der dritten Komponente nicht nur durch Haftung gesichert ist, sondern zusätzlich durch Formschluss.

Gemäß vorteilhaften Ausführungsformen erfindungsgemäßer Verfahren ist für das Übergießen bzw. Einspritzen ein Schäumprozess mit einem "Atmen-Prägen-Lüften"-Verfahren oder einem "Prägen-Lüften"-Verfahren ausgeführt. Demnach ist das Werkzeug für eine Füllphase, sogenanntes Atmen, leicht offen und öffnet sich während der Füllphase weiter. Ein anschließendes Schließen des Werkzeugs bewirkt ein "Prägen", auf das ein erneutes Öffnen des Werkzeugs vorteilhaft folgt. Dadurch werden Innenspannungen im Hohlraum deutlich minimiert und gut verteilt. Im Rahmen der Erfindung verwendete Schäumverfahren funktionieren entweder physikalisch oder chemisch.

Nachfolgend wird die Erfindung anhand von zwei erfindungsgemäßen Verfahrensausführungsbeispielen näher erläutert. Es zeigen
- Fig. 1: ein Werkzeug zur Durchführung eines erfindungsgemäßen Verfahrens, wobei schematisch lediglich zwei Formen in einer ersten Grundposition gemäß einem ersten Ausführungsbeispiel eines erfindungsgemäßen Verfahrens mit eingelegten Komponenten des zu formenden Verkleidungsteils im Schnitt dargestellt sind,
- Fig. 2: das Werkzeug aus Figur 1 nach einem Einspritzen einer zweiten Komponente in einen Zwischenraum zwischen die eingelegten Komponenten,
- Fig. 3: das Werkzeug aus Figur 1 nach einem Verfahrensschritt "Prägen",
- Fig. 4: das Werkzeug aus Figur 1 nach einem Verfahrensschritt "Lüften",
- Fig. 5: das Werkzeug aus Figur 1 in einer alternativen Grundposition als Verfahrensbeginn eines zweiten Ausführungsbeispiels eines erfindungsgemäßen Verfahrens,
- Fig. 6: das Werkzeug aus Figur 5 während eines Verfahrensschritts "Einspritzen und Prägen",
- Fig. 7: das Werkzeug aus Figur 5 nach dem Verfahrensschritt "Einspritzen und Prägen" und
- Fig. 8: das Werkzeug aus Figur 5 nach einem Verfahrensschritt "Lüften".

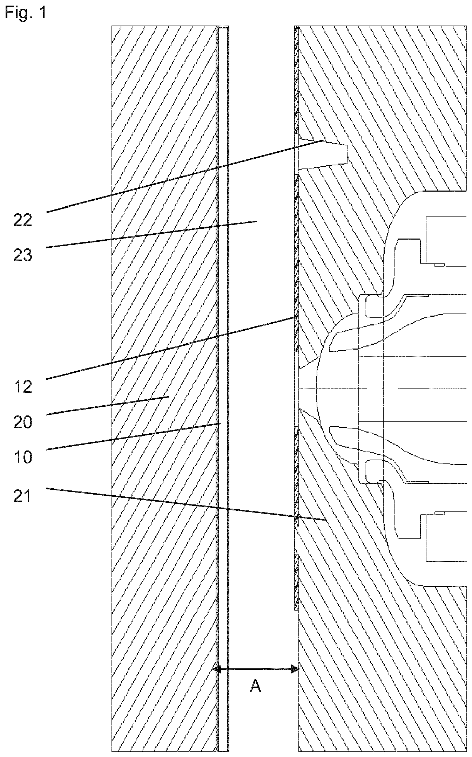

Die Figuren 1 bis 4 zeigen ein Werkzeug zur Durchführung eines erfindungsgemäßen Verfahrens mit Formen 20, 21 in diversen Positionen gemäß verschiedener Verfahrensschritte eines ersten Ausführungsbeispiels des erfindungsgemäßen Verfahrens.

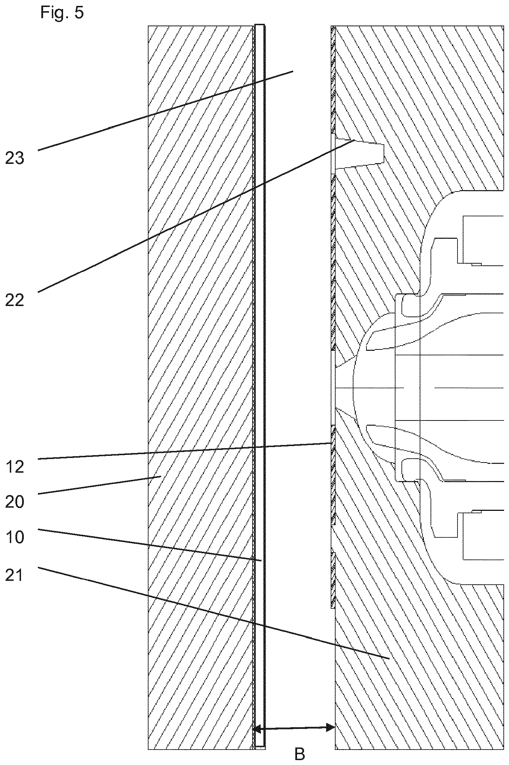

Die Figuren 5 bis 8 verdeutlichen einen alternativen erfindungsgemäßen Verfahrensablauf gemäß einem zweiten Ausführungsbeispiel.

Das erfindungsgemäße Verfahren für die Herstellung eines Verkleidungsteils, im Ergebnis der Erfindung bestehend aus zumindest den dargestellten drei Komponenten 10, 11, 12, das insbesondere für den Innenraum eines Fahrzeugs geeignet ist, verwendet zumindest zwei Formen 20, 21, von denen beispielsweise eine Form stationär 21 feststeht und eine zweite Form bewegbar 20 sind. Das Verkleidungsteil wird zumindest teilweise aus Kunststoffmaterial hergestellt. Vorliegend bestehen alle drei Komponenten 10, 11, 12 aus Kunststoff.

Als ein Vorbereitungsschritt, wie er im Ergebnis den Figuren 1 und 5 entnommen werden kann, werden die erste Komponente 10 in die bewegbare Form 20 und die dritte Komponente 12 in die stationäre Form 21 eingelegt. Die zweite Komponente 11 wird mittels eines Einspritzprozesses zwischen der ersten Komponente 10 und der dritten Komponente 12 in einen Zwischenraum 23 eingebracht und damit auf der ersten Komponente 10 übergossen. Das geschieht in einer einzigen Station, wodurch sich Kostenvorteile ergeben. Bekannte Verfahren fügen ein Dekorteil und ein Strukturteil in einem zusätzlichen Prozess zusammen, nachdem ein Dekor und ein Trägerteil zunächst als Dekorteil unabhängig gefertigt worden sind.

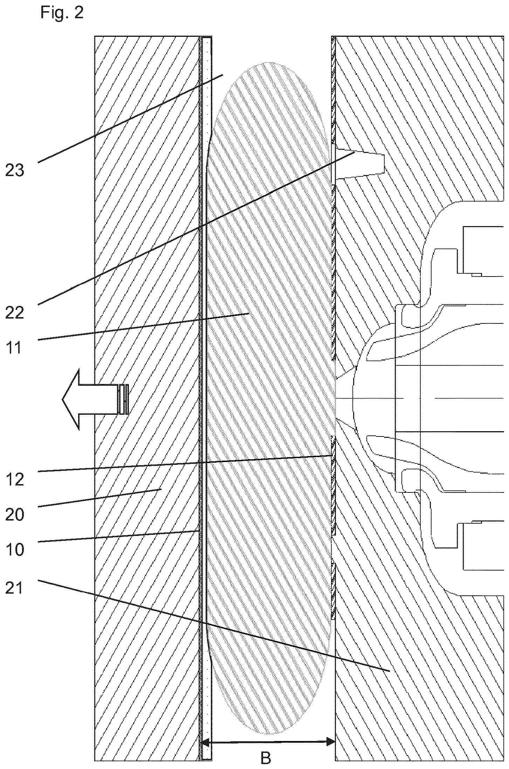

Ausgehend von einer ersten Grundposition, in der gemäß Figur 1 die beiden Formen 20, 21 in einem Abstand A zueinander stehen, werden gemäß dem ersten Ausführungsbeispiel und gemäß Figur 2 nach dem Übergießen und/oder während des späteren Übergießens die Formen 20, 21 voneinander wegbewegt werden, wie mit einem Pfeil angedeutet. Der Zwischenraum 23 ist mithin vergrößert.

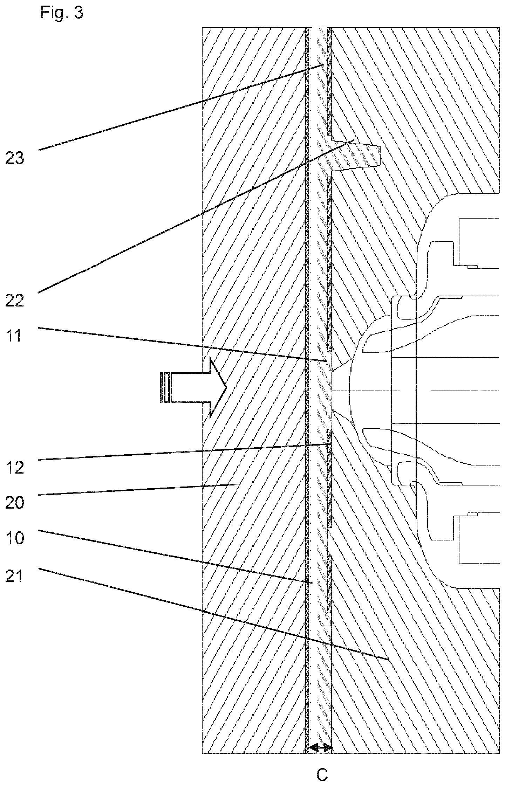

Darauf folgend wird in einem Verfahrensschritt "Prägen" die bewegbare Form 20 der stationären Form 21 entgegen bis in eine Prägeposition verschoben (Figur 3). Ein in der Prägeposition erreichter Abstand C zwischen den Formen 20, 21 ist kleiner als der Abstand A der ersten Grundposition.

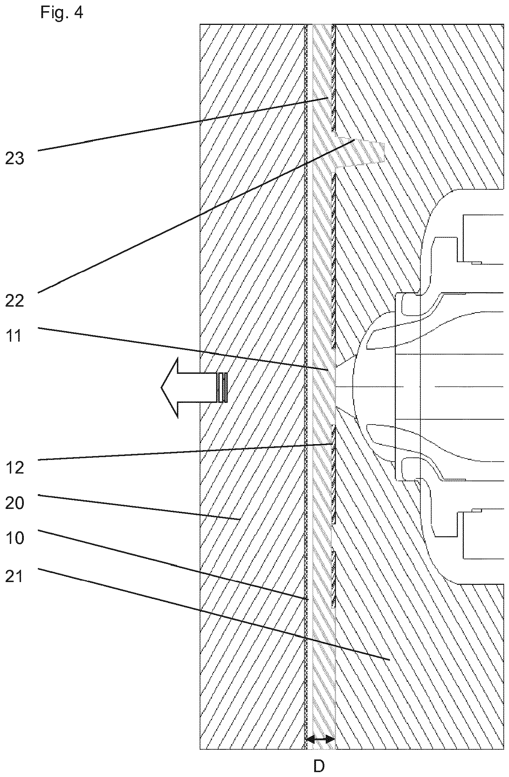

Dem ersten Ausführungsbeispiel weiter folgend wird darauf hin in einem Verfahrensschritt "Lüften" ein Expansionshub der bewegbaren Form 20 bis in eine Endposition ausgeführt. Danach sind die Formen 20, 21 gemäß Figur 4 in einen Abstand D zueinander gestellt, der größer ist als der Abstand C der Prägeposition.

Das erfindungsgemäße Verfahren gemäß zweitem Ausführungsbeispiel beginnt gemäß Figur 5 mit einer alternativen Grundposition mit in einen Abstand B zur stationären Form 21 gestelltem bewegbarer Form 20.

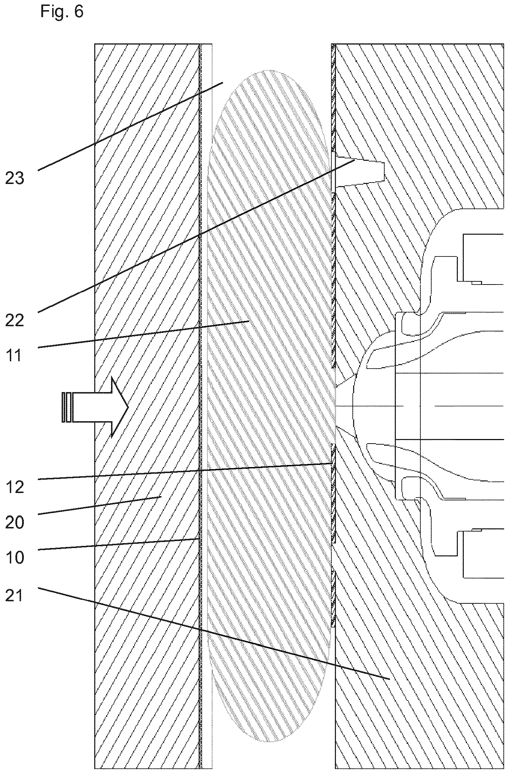

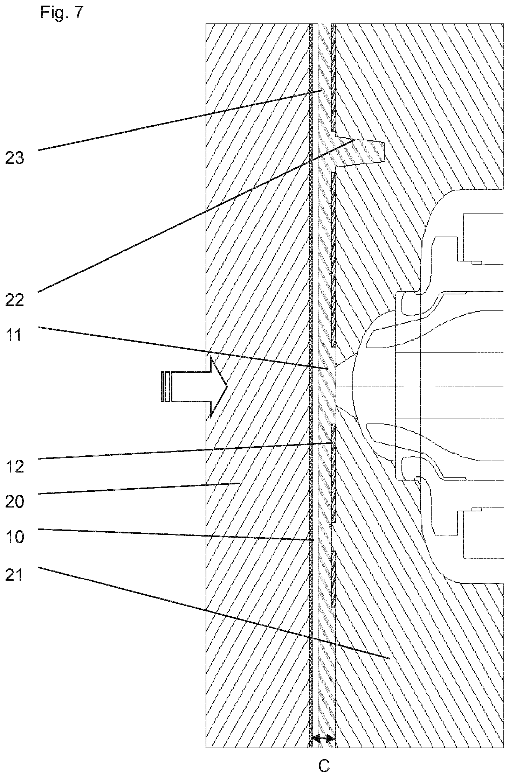

Während des Einspritzens wird, wie es in Figur 6 mit einem Pfeil dargestellt ist, der Zwischenraum 23 zwischen den Formen 20, 21 verkleinert. Dabei wird die bewegbare Form 20 auf die stationäre Form 21 zubewegt, bis eine Prägeposition (Figur 7) erreicht ist, in der die Formen 20, 21 den Abstand C zueinander eingenommen haben. Im Abstand C wird "geprägt".

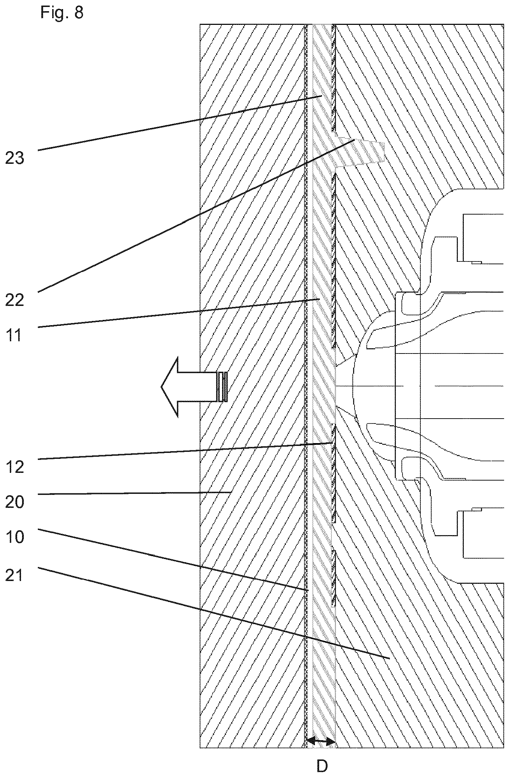

Auf das "Prägen" erfolgt ein Expansionshub der bewegbaren Form 20, bis ein Abstand D zwischen den Formen 20, 21 erreicht ist (Figur 8).

Gemäß den dargestellten Ausführungsbeispielen werden während des Verfahrensschrittes "Übergießen" durch die dritte Komponente 12 hindurch Hohlräume 22 der stationären Form 21 durch den eingespritzten Kunststoff erreicht.

Gemäß den dargestellten erfindungsgemäßen Ausführungsbeispielen ist die erste Komponente 10 eine Dekorschicht ist, insbesondere zumindest teilweise bestehend aus Kunstleder, Schaumkunstleder, thermoplastischen Polyolefinen und/oder Häuten zur Fertigung von Verkleidungsteilen im Fahrzeuginnenraum. Die zweite Komponente 11 ist vorteilhaft ein thermoplastischer Kunststoff, wie z. B. Polypropylen (PP), Acrylnitril-Butadien-Styrol (ABS), Acrylnitril-Butadien-Styrol-Polycarbonat (ABS-PC), thermoplastische Polyesterelastomere (TPE-E), thermoplastische Elastomere auf Styrolbasis, insbesondere auf Urethanbasis (TPE-U), Styrol-Blockcopolymere (TPE-S) oder Polylactat (PLA).

Die dritte Komponente 12 ist vorteilhaft ein Verstärkungshalbzeug, beispielsweise ein Gewebe, Gelege oder Gewirke aus faserverstärktem Kunststoff.

### Bezugszeichenliste

- 10: erste Komponente
- 11: zweite Komponente
- 12: dritte Komponente

- 20: bewegliche Form
- 21: stationäre Form
- 22: Hohlräume
- 23: Zwischenraum

## Patentansprüche

1. Verfahren für die Herstellung eines Verkleidungsteils für den Innenraum eines Fahrzeugs,
1.1 wobei das Verkleidungsteil zumindest teilweise aus Kunststoffmaterial hergestellt wird, mit einer als Dekorschicht ausgebildeten ersten Komponente (10) und zumindest einer zweiten Komponente (11), welche mittels eines Einspritzprozesses auf der ersten Komponente (10) übergossen wird,
1.2 bei dem als ein Vorbereitungsschritt die erste Komponente (10) in eine bewegbare Form (20) eingelegt oder gegossen wird und
1.3 bei dem später die zweite Komponente (11) auf der ersten Komponente (10) übergossen wird,
1.4 dies in einer einzigen Station, wobei
1.5 als ein weiterer Vorbereitungsschritt vor dem späteren Übergießen mit der zweiten Komponente (11) eine dritte Komponente (12), nämlich ein als Verstärkungshalbzeug, beispielsweise ein Gewebe, Gelege oder Gewirke aus faserverstärktem Kunststoff, ausgebildetes Strukturelement, in eine stationäre Form (21) eingelegt oder gegossen wird,
1.6 während des späteren Übergießens die Formen (20, 21) aufeinander zu und/oder voneinander wegbewegt werden, wobei die Eigenschaften der Formen "stationär" und "bewegbar" gegeneinander austauschbar sind und auch beide Formen (20, 21) die Eigenschaft "bewegbar" haben können und wobei die zweite Komponente (11) mittels eines Einspritzprozesses zwischen der ersten Komponente (10) und der dritten Komponente (12) in einen Zwischenraum (23) eingebracht und damit auf der ersten Komponente (10) übergossen wird, und
1.7 während des Verfahrensschrittes 1.3 "Übergießen" durch die dritte Komponente (12) hindurch Hohlräume (22) der stationären Form (21) für den eingespritzten Kunststoff erreicht werden, wodurch die Verbindung zwischen der zweiten Komponente (11) und der dritten Komponente (12) nicht nur durch Haftung gesichert ist, sondern zusätzlich durch Formschluss.

2. Verfahren nach Anspruch 1,
**dadurch gekennzeichnet**,
2.1 dass dem späteren Übergießen der ersten (10) und der dritten (12) Komponente mit der zweiten Komponente (11) in einem Zwischenraum (23) zwischen der ersten und der dritten Komponente (10, 12) vorangehend die bewegbare Form (20) gemäß einer ersten Grundposition in einem Abstand (A) zur stationären Form (21) bereitgestellt ist,
2.2 dass während oder nach dem Einspritzen der zweiten Komponente (11) in den Zwischenraum (23) gemäß dem Verfahrensschritt 1.3 "Übergießen" die bewegbare Form (20) von der stationären Form (21) wegbewegt wird, um den Zwischenraum zu vergrößern,
2.3 dass darauf folgend in einem Verfahrensschritt "Prägen" die bewegbare Form (20) der stationären Form (21) entgegen bis in eine Prägeposition verschoben wird, wobei ein in der Prägeposition erreichter Abstand (C) zwischen den Formen (20, 21) kleiner als der Abstand (A) der ersten Grundposition ist, und
2.4 dass darauf folgend in einem Verfahrensschritt "Lüften" ein Expansionshub der bewegbaren Form (20) bis in eine Endposition ausgeführt wird, wonach die Formen (20, 21) in einen Abstand (D) zueinander gestellt sind, der größer als der Abstand (C) der Prägeposition ist.

3. Verfahren nach Anspruch 1,
**dadurch gekennzeichnet**,
3.1 dass dem späteren Übergießen der ersten Komponente (10) mit der zweiten Komponente (11) vorangehend die bewegbare Form (20) gemäß einer alternativen Grundposition in einen Abstand (B) zur stationären Form (21) gestellt wird,
3.2 dass auf das Einspritzen gemäß dem Verfahrensschritt 1.3 folgt bzw. mit dem "Einspritzen" einsetzt eine Verkleinerung eines Zwischenraums zwischen den Formen (20, 21), wobei die bewegbare Form (20) auf die stationäre Form (21) zubewegt wird, bis eine Prägeposition erreicht ist, in der die Formen (20, 21) einen Abstand (C) zueinander eingenommen haben, und
3.3 dass auf das "Prägen" gemäß dem Verfahrensschritt 3.2 ein Expansionshub der bewegbaren Form (20) erfolgt, bis ein Abstand (D) zwischen den Formen (20, 21) erreicht ist.

## Claims

1. Method for the production of a trim panel for the interior of a motor vehicle,
1.1 wherein the trim panel is at least partially manufactured of a plastic material and has a first component (10), implemented as a decorative layer, and at least one second component (11), which is mo0lded onto the first component (10) by means of an injection process,
1.2 in which, as a preparatory step, the first component (10) is placed or molded into a moveable mold (20) and
1.3 in which, later, the second component (11) is molded onto the first component (10),
1.4 this in a single stage, wherein
1.5 as a further preparatory step, before the subsequent molding of the second component (11), a third component (12), namely a structural element implemented as a semifinished reinforcing product, for example, a woven fabric, a non-crimp fabric or a knitted fabric, is placed or molded into a stationary mold (21),
1.6 during the subsequent molding, the molds (20, 21) are moved toward and/or away from each other, wherein the properties "stationary" and "moveable" of the molds are mutually exchangeable, and both molds (20, 21) may also have the property "moveable", and wherein the second component (11) is introduced into an intermediate space (23) between the first component (10) and the third component (12) by means of an injection process and is thereby molded over the first component (10), and
1.7 during the method step 1.3 "molding", cavities (22) of the stationary mold (21) are accessed through the third component (12) for the injected plastic, by means of which the connection is not only secured by adhesion but, in addition, by a positive fit.

2. Method in accordance with claim 1
characterized
2.1 in that, in advance of the subsequent molding together of the first (10) and third (12) components with the second component (11), the moveable mold (20) is provided at a distance (A) to the stationary mold (21) in accordance with a first base position,
2.2 in that, during or after injecting the second component (11) into the intermediate space (23) in accordance with the method step 1.3 "molding", the moveable mold (20) is moved away from the stationary mold (21), in order to enlarge the intermediate space, 2.3 in that, subsequent to this, in a method step "shaping", the movable mold (20) is moved toward the stationary mold (21) until a shaping position has been reached, wherein a distance (C) between the molds (20, 21), reached in the shaping position, is smaller than the distance (A) of the first base position, and
2.4 in that, subsequent to this, in a method step "uncovering", an expansion stroke of the movable mold (20) into an end position is carried out, after which the molds (20, 21) are arranged at a distance (D) to each other which is greater than the distance (C) of the shaping position.

3. Method in accordance with claim 1,
characterized
3.1 in that, in advance of the subsequent molding of the first component (10) with the second component (11), the moveable mold (20) is placed at a distance (B) to the stationary mold (21) in accordance with an alternative base position,
3.2 in that, subsequent to the injecting in accordance with the method step 1.3 or together with the "injecting", an intermediate space between the molds (20, 21) is reduced, during which the moveable mold (20) is moved toward the stationary mold (21) until a shaping position has been reached in which the molds (20, 21) have assumed a distance (C) to each other, and
3.3 in that, subsequent to the "shaping" in accordance with method step 3.2, an expansion stroke of the moveable mold (20) is carried out until a distance (D) between the molds (20, 21) has been reached.

## Revendications

1. Procédé de fabrication d'un élément d'habillage pour l'habitacle d'un véhicule, selon lequel
1.1 on réalise par un procédé d'injection, l'élément d'habillage au moins en partie, en une matière plastique avec un premier composant (10) formant une couche décorative et au moins un second composant (11) qui recouvre le premier composant (10),
1.2 selon lequel, dans une étape préparatoire, on introduit ou on coule le premier composant (10) dans un moule mobile (20), et
1.3 selon lequel ultérieurement on recouvre le premier composant (10) avec le second composant (11),
1.4 ceci dans un seul poste, avec
1.5 comme autre étape préparatoire avant le futur recouvrement avec le second composant (11), on place ou on coule un troisième composant (12), à savoir un élément de structure comme produit semi-fini de renforcement, par exemple, un tissu, une nappe ou un tricot en matière plastique renforcée par des fibres, dans un moule (21) fixe,
1.6 au cours du revêtement ultérieur, on déplace les moules (20, 21) les uns sur les autres ou/ et on les écarte,
les propriétés des moules « fixes » et « mobiles » pouvant être échangées et les deux moules (20, 21) peuvent avoir la propriété d'être « mobiles », et on introduit par un procédé d'injection le second composant (11) entre le premier composant (10) et le troisième composant (12) dans un espace intermédiaire (23) et pour ainsi revêtir le premier composant (10), et
1.7 au cours de l'étape 1.3 de « revêtement » à travers le troisième composant (12) on atteint des cavités (22) du moule fixe (21) avec la matière plastique injectée, la liaison entre le deuxième composant (11) et le troisième composant (12) n'étant pas seulement assurée par accrochage, mais en plus par une liaison par la forme.

2. Procédé selon la revendication 1,
**caractérisé en ce que**
2.1 avant le future revêtement du premier composant (10) et du troisième composant (12) avec le second composant (11), dans un espace intermédiaire (23) entre le premier et le troisième composant (10, 12), on écarte le moule mobile (20) dans une première position de base à une distance (A) du moule fixe (21),
2.2 pendant ou après l'injection du troisième composant (11) dans l'espace intermédiaire (23) entre l'étape de procédé 1.3 de « revêtement », on déplace le moule mobile (20) par rapport au moule fixe (21) pour augmenter l'espace intermédiaire,
2.3 ensuite dans une étape de procédé « impression », on glisse le moule mobile (20) vers le moule fixe (21) jusqu'à une position d'impression, la distance (C) en position d'imprégnation entre les moules (20, 21) est inférieure à la distance (A) de la première position de base, et
2.4 ensuite, dans une étape de procédé « aération », on effectue une course d'expansion avec le moule mobile (20) jusqu'à une position finale et on met les moules (20, 21) à une distance (D) l'un par rapport à l'autre, cette distance étant supérieure à la distance (C) de la position d'impression.

3. Procédé selon la revendication 1,
**caractérisé en ce que**
3.1 avant le futur recouvrement du premier composant (10) avec le second composant (11), on met le moule mobile (20) selon une variante, de la position de base à une distance (B) du moule fixe (21),
3.2 l'injection selon l'étape de procédé 1.3 ou « l'injection » se traduit par une réduction de l'intervalle entre les moules (20, 21),
le moule mobile (20) se déplaçant vers le moule fixe (21) jusqu'à atteindre une position d'impression dans laquelle les moules (20, 21) ont entre eux une distance (C), et
« l'impression » selon l'étape de procédé 3.2 est suivie d'une course d'expansion du moule mobile (20) jusqu'à atteindre une distance (D) entre les moules (20, 21).
